**Europäisches Patentamt**

**European Patent Office**

**Office européen des brevets**

(19)

(11) **EP 1 555 641 A1**

(12) **EUROPEAN PATENT APPLICATION**

(43) Date of publication:
**20.07.2005 Bulletin 2005/29**

(51) Int Cl.⁷: **G07F 17/32, A63F 13/10**

(21) Application number: **05000745.9**

(22) Date of filing: **14.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **16.01.2004 JP 2004009821**

(71) Applicant: **Kabushiki Kaisha Square Enix (also trading as Square Enix Co., Ltd.)**
**Tokyo 151-8544 (JP)**

(72) Inventors:
• **Matsuno, Yasumi**
  **Tokyo 151-8544 (JP)**

• **Maehiro, Kazutoyo**
  **Tokyo 151-8544 (JP)**
• **Tanba, Hidehito**
  **Tokyo 151-8544 (JP)**
• **Murasawa, Yuichi**
  **Tokyo 151-8544 (JP)**

(74) Representative: **Grünecker, Kinkeldey, Stockmair & Schwanhäusser Anwaltssozietät**
**Maximilianstrasse 58**
**80538 München (DE)**

(54) **Simulation of virtual commercial transactions**

(57) Multiple shops exist in a virtual space of a game. Each shop belongs to any one of multiple unions. When a player character buys or sells a game item at any of the shops, a power point value of the union to which the shop belongs is increased according to the sales amount. The higher the power rank of the union to which the shop belongs becomes, the more the types of sellable and buyable game items are increased. The higher the power tank of the union to which the shop belongs becomes, the more cheaply the player can buy the game item and the higher the amount the player can sell the game item. The higher the power rank of the union where the shop belongs becomes, the more points that are given to a point card according to the buying or selling of the game items.

**FIG.4**

240

| POWER RANK | SELLING TIME COEFFICIENT | BUYING TIME COEFFICIENT | POINT PAYOUT RATE | DEALING RANK |
|---|---|---|---|---|
| 1 | | | | |
| 2 | | | | |
| 3 | | | | |
| 4 | | | | |
| 5 | | | | |

241  242  243  244  245

## Description

CROSS REFERENCE TO RELATED APPLICATION

The present disclosure relates to subject matter contained in Japanese Patent Application No. 2004-9821, filed on January 16, 2004, the disclosure of which is expressly incorporated herein by reference in its entirety.

BACKGROUND OF THE INVENTION

Field of the Invention

The present invention relates to video games. More specifically, the present invention relates to simulating virtual commercial transactions between a player character and a dealer.

Description of the Related Art

In a conventional role playing game, game items (weapons, defense items, tools, magic, etc.) that are used when the player character progresses through the game are bought and sold at shops provided in a virtual space in the game. A sale price of the same game item is generally maintained at a predetermined fixed price from the start of the game to the end of the game.

In contrast to the world of the game, in the real world it is common for the sale price of the game item to vary. Unexamined Japanese Patent Publication No. 2003-225459 discloses a game that varies a price of a game item to be bought and sold at a shop in a virtual space. The buying and selling of the game item in this game come somewhat close to buying and selling of commodities in the real world as compared with the buying and selling of the game item at the fixed price.

However, the sale price of the commodity in the real world is decided according to the relationships between sellers, between buyers, or between both sides. Namely, decision elements of the commodity sale price include competition between the sellers and competition between the buyers. In contrast to this, in this game, the sale price of the same game item does not differ for each shop at the same moment. In the game disclosed in JP 2003-225459, the competition between the sellers and the competition between the buyers are not reflected in the decision of the sale price of a game item.

Unexamined Japanese Patent Publication No. 2003-325984 discloses the following game. In a network game in which multiple players join, points, which are given according to the degree of achievement of a task of each player character, are collected for each group to which each player belongs. The sale price of the game item and a type of saleable game item change according to the points collected for each group. This game makes it possible to improve the player's sense of belonging to the group and to change the content of the game.

In the game disclosed in JP 2003-325984, when the shop differs at the same moment, the sale price of the game item differs. In this game, the competition between the player characters that are the buyers is reflected in the decision of the sale price of a game item. However, the competition between the shops that are the sellers is not reflected in the decision of the sale price of a game item. In addition, the decision of the sale price of a game item in this game can only be applied to a network game in which multiple players join and cannot be applied to a stand-alone game in which only a single player joins.

Conventionally, there is no game that reflects the competition between the sellers to change the sale price of a game item regardless of whether the game is a network game or a stand-alone game. Since the action of the seller in the game can not be controlled based on an instruction from a user, unlike the action of the player character, it is impossible to realize competition between sellers when simulating realistic commercial transactions in the game. Regarding other forms of commercial transactions, such as an additional service according to the use of service and a sales amount in addition to the buying and selling of a game item, an experience of the game that comes close to the real world can not be realized.

SUMMARY OF THE INVENTION

An object of the present invention is to provide a game that reflects competition between dealers, which are not operated by a player, and changes a form of a commercial transaction between the dealers and a player character, which is operated by the player.

In order to attain the above object, a game apparatus according to a first aspect of the present invention executes a game including virtual commercial transactions between multiple dealers existing in a virtual space and a player character that operates according to a player's instruction. The game apparatus includes a dealer union storage that stores multiple dealer unions, to which each of the dealers belong.

The game apparatus further includes an evaluation value setting section that sets an evaluation value of each dealer union that the dealers belongs to based on previous commercial transactions performed between the player character and the dealers. The game apparatus further includes a transaction form changer that changes a form of a current commercial transaction performed between one of the dealers and the player character according to the evaluation value of the dealer union to which the dealer belongs.

In the above game apparatus, each of the dealers belongs to one of the dealer unions. When the commercial transaction is performed between the player character and any one of the dealers, the evaluation value is set for the dealer union to which the dealer who performed the commercial transaction belongs. The form of a commercial transaction between one of the dealers and the player character is changed according to the evaluation value of the dealer union to which the dealer belongs. The form of the commercial transaction is changed according to the evaluation value of the dealer union, so that competition between the dealers is reflected during the progress of the game.

Since the competition relationship between the dealers is close to the real world competition, an experience of the game is improved. Since the form of the commercial transaction in the game is not simple, the reality of the game is increased. The competition between the dealers can be realized in the process of the game even if a dealer is not actually simulated. That is, operation of the dealers appearing in the game is not actively simulated. There is no need for an artificial intelligence routine that controls the operation of the dealer, unlike the case of simulating commercial transactions of the real world. As a result, the competition relationship between the dealers is reflected by simple processing, making it possible to execute the commercial transaction between the player character and each dealer.

In order to attain the above object, a game apparatus according to a second aspect of the present invention includes a program memory that stores a program; a data memory that stores data; and a processor that executes the program. The game apparatus executes a game including virtual commercial transactions between multiple dealers existing in a virtual space and a player character that operates according to a player's instruction. The data memory stores dealer unions to which each of the dealers belongs.

The program causes the processor to set an evaluation value of each dealer union, to which each of the dealers belongs, based on previous commercial transactions performed between the player character and the dealers. The program further causes the processor to change a form of a current commercial transaction performed between one of the dealers and the player character according to the evaluation value of the dealer union to which the dealer belongs.

The program stored in the program memory of the game apparatus according to the second aspect of the present invention can be recorded on a computer-readable storage medium. The computer-readable storage medium may be a storage medium constructed to be loaded in the computer apparatus and provided separately from the computer apparatus. The computer-readable storage medium may be a storage medium such as a fixed disk device that is included in the computer apparatus and provided together with the computer apparatus. In the program stored in the program memory of the game apparatus according to the second aspect of the present invention, the data signal can be superimposed on a carrier wave from a server apparatus existing on a network, the result being distributed via the network.

In order to attain the above object, a game progressing method according to a third aspect of the present invention progresses a game including virtual commercial transactions between multiple dealers existing in a virtual space and a player character that operates according to a player's instruction. Each of the dealers belongs to one of multiple dealer unions.

The game processing method sets an evaluation value of each dealer union based on previous commercial transactions performed between the player character and the dealers. The game processing method further changes a form of a current commercial transaction performed between one of the dealers and the player character according to the set evaluation value of the dealer union to which the dealer belongs.

BRIEF DESCRIPTION OF THE DRAWINGS

FIG. 1 is a block diagram illustrating a configuration of a video game apparatus according to an embodiment of the present invention;

FIG 2 is a view illustrating a game item table according to an embodiment of the present invention;

FIG 3 is a view illustrating a shop basic data table according to an embodiment of the present invention;

FIG 4 is a view illustrating a commercial condition table according to an embodiment of the present invention;

FIG 5 is a view illustrating a card rank table according to an embodiment of the present invention;

FIG 6 is a view illustrating a player character table according to an embodiment of the present invention;

FIG. 7 is a view illustrating a point card table according to an embodiment of the present invention;

FIG 8 is a view illustrating a union data table according to an embodiment of the present invention;

FIG 9 is a view illustrating a shop data table according to an embodiment of the present invention;

FIGS. 10A to 10C are views each illustrating a menu screen when a player character trades in a game item at a shop;

FIG 11 is a flowchart illustrating main processing in a video game according to an embodiment of the present invention;

FIG 12 is a flowchart specifically illustrating game item transaction processing of FIG. 11 according to an embodiment of the present invention;

FIG 13 is a flowchart specifically illustrating power rank processing of FIG. 12 according to an embodiment of the present invention; and

FIG 14 is a flowchart specifically illustrating union membership change processing of FIG 13 according to an embodiment of the present invention.

## DETAILED DESCRIPTION OF PREFERRED EMBODIMENT

An embodiment of the present invention will be specifically described with reference to the drawings.

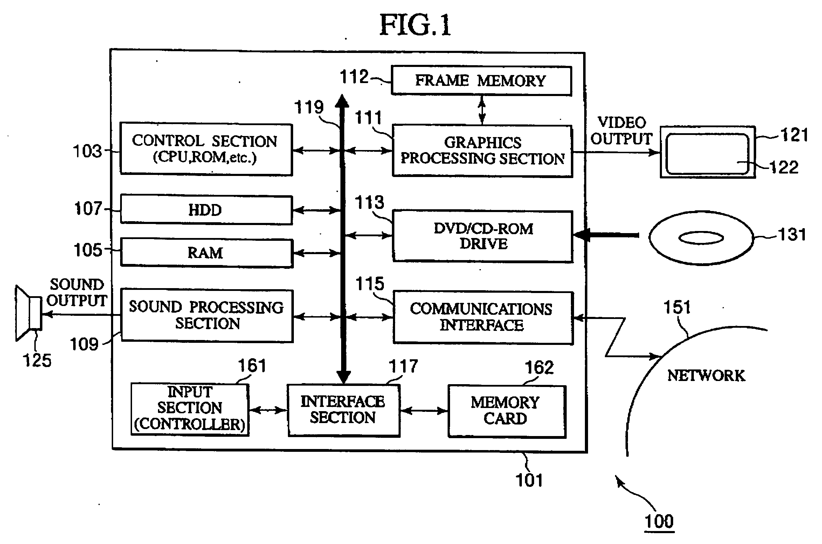

FIG 1 is a block diagram illustrating a configuration of a video game apparatus 100 for executing the video game according to an embodiment of the present invention. As illustrated in the figure, the video game apparatus 100 is mainly constructed to include a video game main body 101. The video game main body 101 includes a control section 103, a RAM (Random Access Memory) 105, a hard disk drive (HDD) 107, a sound processor 109, a graphics processor 111, a DVD/CD-ROM drive 113, a communications interface 115, and an interface section 117, which are connected to an internal bus 119.

The sound processor 109 is connected to a sound output device 125, which is a speaker. The graphics processor 111 is connected to a display device 121 having a display screen 122. A storage medium (DVD-ROM or CD-ROM in this embodiment) 131 can be attached to the DVD/CD-ROM drive 113. The communications interface 115 is connected to a network 151. An input section (controller) 161 and a memory card 162 are connected to the interface section 117.

The control section 103 includes a CPU (Central Processing Unit), a ROM (Read Only Memory), etc., and executes a program stored on the HDD 107 or the storage medium 131 to control the video game main body 101. The control section 103 has an internal timer. The RAM 105 is a work area for the control section 103. The HDD 107 is a storage area for storing a program and data. In the case where a program executed by the control section 103 instructs the sound processor 109 to output a sound, the sound processor 109 interprets the instruction and outputs a sound signal to the sound output device 125.

The graphics processor 111 develops an image onto the frame memory (frame buffer) 112 and outputs a video signal, which displays the image on the display screen 122 of the display device 121 according to a drawing command output from the control section 103. It is assumed that one frame period of the image included in outputting the video signal is, for example, 1/30 sec. The graphics processor 111 draws one image in one frame period (namely, 1/30 sec.). The DVD/CD-ROM drive 113 reads the program and data from the storage medium 131. The communications interface 115 is connected to the network 151 (e.g., the Internet) to perform communications with other computers.

The interface section 117 outputs input data sent from the input section 161 to the RAM 105. The control section 103 interprets the input data from the input section 161 to carry out arithmetic processing. The input section 161 includes a directional key and multiple operation buttons. The directional key is used to move a player character and a cursor in the game. Each operation button is used to instruct an operation of the player character and a decision of an item indicated by the cursor. The interface section 117 forwards data, indicative of the progress of the game stored in the RAM 105, to the memory card 162 based on the instruction from the control section 103. The interface section 117 reads data of the game at the time of interruption from the memory card 162 and transfers the read data to the RAM 105 based on the instruction from the control section 103.

The program and data for performing the game by the video game apparatus 100 are first stored on, for example, the storage medium 131. The program and data are read by the DVD/CD-ROM drive 113 and loaded onto the RAM 105 at the time of execution. The control section 103 processes the program and data loaded onto the RAM 105, outputs a drawing command to the graphics processor 111, and outputs an instruction of a sound output to the sound processor 109. Intermediate data is stored in the RAM 105 while the control section 103 performs processing.

In the video game according to this embodiment, a field as a movement space for a player is formed in a virtual space. The player operates the input section 161 to move a player character on the field to progress the game. The player character can move on land in the game space, at high speed by car, airplane, etc., and progress while at sea, within the game space, by ship. These vehicles can be used according to an instruction input from the input section 161 when the player character arrives at a predetermined location on the field.

On the field, game items (except virtual money to be described later) are placed at predetermined locations. The game items are sometimes put in a treasure box. When arriving at a predetermined location of the game item, the player character can obtain a game item by a predetermined player's operation from the input section 161. When the player character arrives at a predetermined location on the field, a battle between the player character and an enemy character (non-player character) is sometimes started. When winning the battle with the enemy character, the player character sometimes obtains a game item according to the type of the defeated enemy character.

On the field, multiple shops (26 shops Sa to Sz in this example) exist. A merchant character (non-player character) that buys and sells game items exists at each shop. The "shop" indicates the merchant character existing at the shop in some cases. The player character can buy and/or sell a game item/items at each shop. It is assumed that the game items bought and sold between the player character and each shop includes both game items that can be continuously used such as a weapon, a defense item, etc., and game items that can be used only one time such as a tool.

The game items are bought and sold between the player character and each shop by using virtual money (hereinafter simply referred to as "money"). Money is sometimes needed to use the vehicle. Similar to the case of the game item, the player character can obtain money at a predetermined location on the field according to an instruction input from the input section 161 and further obtain money according to the enemy character defeated during the battle. When clearing a predetermined event set in the game, the player character can also obtain money according to the cleared event.

Each shop belongs to any one of multiple unions (5 unions Ua to Ue in this example). The union to which each shop belongs sometimes changes. A method for deciding union membership will be described later. A power rank is given to each of the unions as described later. The sale price of the game items at each shop and the type of saleable game items at each shop change according to the power rank of the union to which the shop belongs.

The player character possesses a point card prepared for each union. When the player character buys or sells a game item at the shop, points are accumulated in the point card of the union to which the shop belongs according to the sale price. Multiple grades, each having a different point payout rate, are fixed to the point card and the grade of the point card can be upgraded according to the accumulation of points. The points accumulated in the point card can be used at the time of purchasing a game item at the shop belonging to the corresponding union. Even when the player character uses a vehicle in the game, a point value based on a mileage is added to one of the point cards.

An explanation will be given of various kinds of data necessary for trading game items between the player character and each shop. As fixed data among data for trading game items between the player character and each shop, there are a game item table, a shop basic data table, a commercial condition table, and a card rank table. These fixed data items are prestored in the storage medium 131 and transferred to the RAM 105 or HDD 107 at the time of executing the game. As variable data among data for trading in game items between the player character and each shop, there are a player character table, a point card table, a union data table and a shop data table. These variable data items are stored in a predetermined storage area provided in the RAM 105.

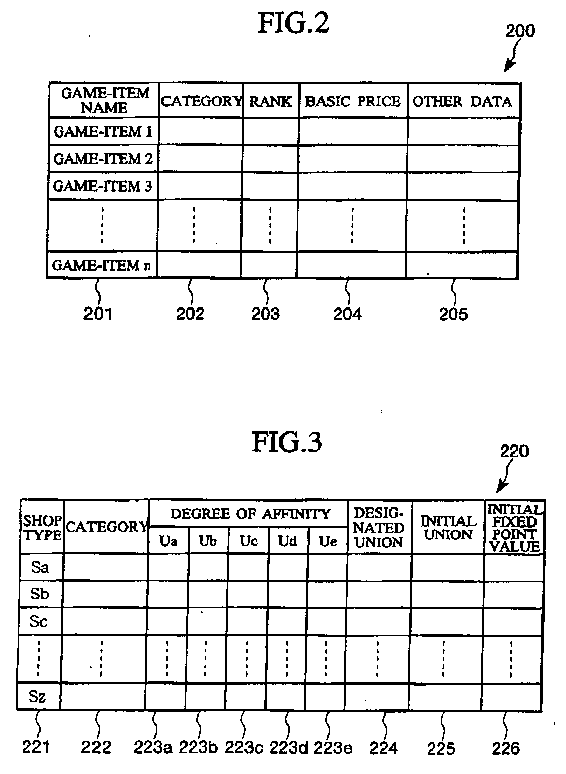

FIG. 2 is a view illustrating a game item table 200 of the fixed data. As illustrated in the figure, a game item name 201, a category 202, a rank 203, a basic price 204, and other data 205 are registered in the game item table 200 to be associated with one another. The game item name 201 indicates a name of the game item and any of game item 1 to game item n (n is the number of types of game items) is registered therein. The category 202 indicates a category of the game item and any of a weapon, a defense item, and a tool is registered therein. Each shop can buy and sell the game items of one category fixed for each shop.

The rank 203 indicates a rank of the game item that each shop can buy and sell and any of ranks A, B, C (A is the highest rank) is registered. Each shop can buy and sell only the game items ranked according to the rank of the union to which the shop belongs. The basic price 204 is a basic price at the time of buying and selling the game item. The actual sale price of a game item at each shop is calculated by multiplying the basic price by a coefficient according to the rank of the union to which the shop belongs. The other data 205 indicates various kinds of data fixed to the game item. The other data 205 includes a parameter of offensive power in the case of a weapon and the data includes a parameter of defensive power in the case of a defense item.

FIG. 3 is a view illustrating a shop basic data table 220 among the fixed data. As illustrated in the figure, a shop type 221, a category 222, a degree of affinity 223a to 223e to each of unions Ua to Ue, a designated union 224, an initial union 225, and an initial fixed point value 226 are registered in the shop basic data table 220 to be associated with one another. The shop type 221 indicates a type of shop existing in the virtual space, and in this example 26 shops Sa to Sz are registered therein. The category 222 indicates a category of each game item that each of shops Sa to Sz buys and sells. Similar to the category 202, any of a weapon, a defense item, and a tool is registered in the category 222.

The degree of affinity 223a to 223e is an index indicating to which union of the unions Ua to Ue each of the shops Sa to Sz easily belongs. When the shops Sa to Sz change their membership to unions in response to variations in the power ranks of the unions Sa to Sz, as described later, each membership union is more likely to be changed to one of unions Ua to Ue with a high degree of affinity 223a to 223e. The designated union 224 indicates a union that is less likely to be changed when the shop belongs thereto, and one of unions Ua to Uz is registered therein. The initial union 225 indicates a union to which each of the shops Sa to Sz belongs at the time of starting the game, and one of the unions Ua to Uz is registered therein. The initial fixed point value 226 indicates a fixed point value given to each of the shops Sa to Sz at the time of starting the game or at the time of changing unions. The details of the fixed point value are described later.

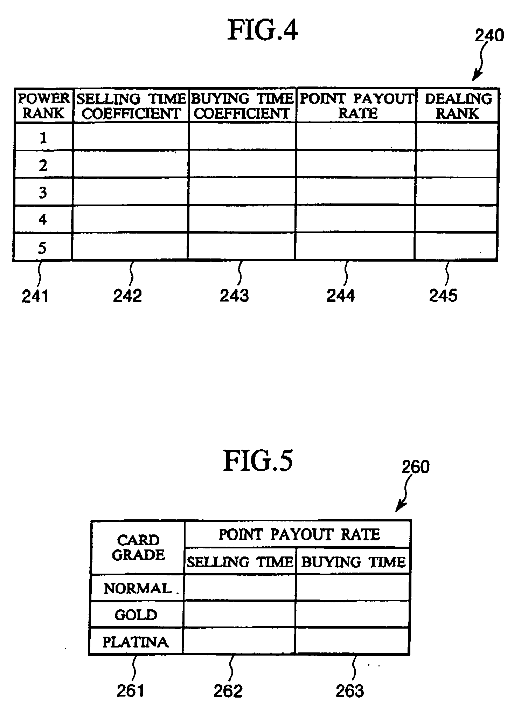

FIG. 4 is a view illustrating a commercial condition table of the fixed data. As illustrated in the figure, a power rank 241, a selling time coefficient 242, a buying time coefficient 243, a point payout rate 244 and a dealing rank 245 are registered in a commercial condition table 240 to be associated with one another. The power rank 241 is a rank determined according to the power points of the unions Ua to Ue, which is calculated when the player character leaves one of the shops Sa to Sz. The form of transaction between the player character and each shop is changed based on the power rank 241.

The selling time coefficient 242 is a coefficient by which the basic price 204 is multiplied in order to calculate an actual sale price when the player character sells a game item at one of the shops Sa to Sz belonging to one of the unions Ua to Ue corresponding to the power rank 241. The higher the power rank 241 is, the higher the selling time coefficient 242 becomes. The buying time coefficient 243 is a coefficient by which the basic price 204 is multiplied in order to calculate an actual purchase price when the player character buys a game item at one of the shops Sa to Sz belonging to one of the unions Ua to Ue corresponding to the power rank 241. The higher the power rank 241 is, the lower the buying time coefficient 243 becomes. The buying time coefficient 243 is higher than the selling time coefficient 242 in the same power rank.

The point payout rate 244 is a payout rate of the points accumulated in the point card according to the sale price of a game item. The point value actually added to points of the point card in the case where the player character buys or sells the game item at one of the shops Sa to Sz is calculated by the following process. The sale price of the game item is multiplied by the point payout rate 244 corresponding to the power rank 241 of the union Ua to Ue to which the shop belongs. Further, the result is multiplied by the point payout rate according to the grade of the point card to be described later and the selling or buying.

The dealing rank 245 indicates a rank of game items that can be bought and sold by each of the shops Sa to Sz belonging to the unions Ua to Ue corresponding to the power rank 241. The higher the power rank 241 is, the higher the dealing rank 245 becomes. Even in the case of game items with a rank registered in the dealing rank 241, game items that are different from the category 222 of the shops Sa to Sz are neither bought nor sold.

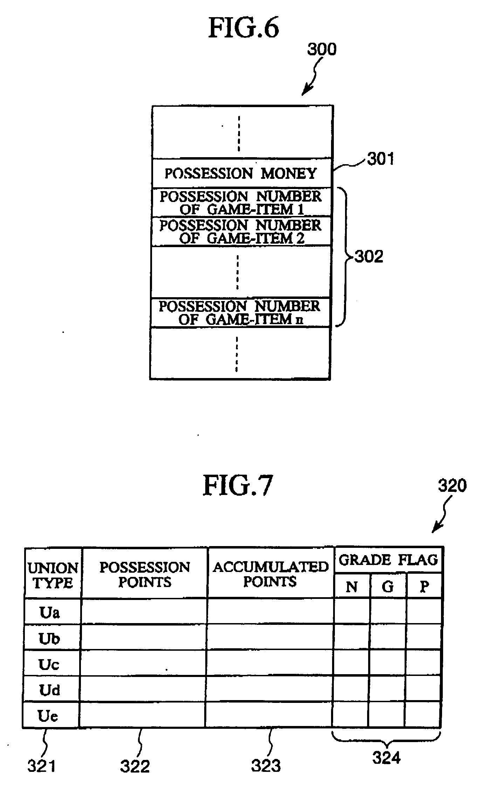

FIG 5 is a view illustrating a card rank table of the fixed data. As illustrated in the figure, a card grade 261, a selling time point payout rate 262, and a buying time point payout rate 263 are registered in a card rank table 260 to be associated with one another. The card grade 261 indicates a grade of the point card of each of the unions Ua to Ue and three kinds of grades, for example, normal, gold and platina are registered therein.

The selling time point payout rate 262 is a payout rate of the points accumulated in the point card according to the sale price. The selling time point payout rate 262 differs according to the grade of the point card corresponding to the unions Ua to Ue to which the shop where the player character sells a game item belongs. The buying time point payout rate 263 is a payout rate of the points accumulated in the point card according to the purchase price. The buying time point payout rate 262 differs according to the grade of the point card corresponding to the unions Ua to Ue to which the shop where the player character buys the game item belongs.

FIG 6 is a view illustrating a player character table of the variable data. As illustrated in the figure, player character's possession money 301 and possession number 302 of each of the game item 1 to game item n are registered in a player character table 300. The possession money 301 is an amount of money that the player character possesses. In the possession number 302, the number of the game item that the player character possesses is registered in connection with each of the game items 1 to game item n. The maximum number of each game item that the player can possess is predetermined according to the type of game item. Various kinds of parameters relating to the player character which are not directly related to the present invention are also registered in the player character table 300, though they are not illustrated in the figure.

FIG 7 is a view illustrating a point card table of the variable data. As illustrated in the figure, a union type 321, possession points 322, accumulated points 323, and grade flags 324 of three kinds, normal, gold and platina are registered in a point card table 320 to be associated with one another. The union type 321 indicates the type of each of the unions Ua to Ue corresponding to each point card.

The possession points 322 indicates a number of points that the player character currently possesses in connection with the point card of each of the unions Ua to Ue. The possession points 322 are added to the point card when the player character buys or sells a game item at the shop belonging to the corresponding union or uses the vehicle to obtain mileage. The possession points 322 are decreased when the points are used to purchase a game item. The accumulated points 323 indicate a sum total of points accumulated to the point card of each of the unions Ua to Ue from the start of the game and is not decreased even when the points are used to purchase a game item.

The grade flag 324 is a flag indicating a grade of the point card of each of the unions Ua to Ue. In an initial state, no flag is set. When the player character buys or sells a game item at one of the shops Sa to Sz, a normal flag corresponding to one of the unions Ua to Ue to which the shop belongs is set. The grade of the point card can be upgraded according to the accumulated points 323. When an upgrade is instructed by the player, the flag of the instructed higher grade is set.

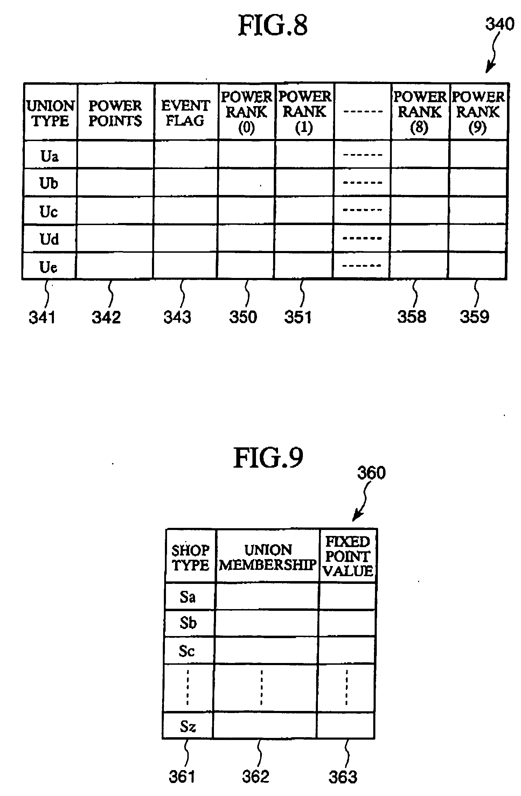

FIG. 8 is a view illustrating a union data table of the variable data. As illustrated in the figure, a union type 341, power points 342, an event flag 343 and power ranks (0) to (9) 350 to 359 are registered in a union data table 340 to be associated with one another. The union type 341 indicates a union to which each of the shops Sa to Sz belongs, and one of the unions Ua to Ue is registered therein.

The power points 342 indicate the power of each of the unions Ua to Ue. Regarding the power points 342 corresponding to each of the unions Ua to Ue, when the player character exits each of the shops Sa to Sz after buying and/or selling a game item, a point value according to the sale price of the game item is added to the power points 342 of the union to which the shop belongs. The power points 342 corresponding to each of the unions Ua to Ue is adjusted in such a way that its minimum value reaches 0. The event flag 343 is a flag indicating whether a fixed event (for example, a sale period, etc.) is being held during the progress of the game in connection with each of the unions Ua to Ue. The flag is set when the event starts and is reset when the event ends.

The power rank (0) 350 indicates the latest power rank of each of the unions Ua to Ue given based on the value of the power points 342. The power rank (0) 350 is updated only when the rank of the power points 342 is changed by performing addition of the power points 342 when the player character leaves the shop. Power ranks (1) to (9) 351 to 359 are the past power ranks of the unions Ua to Ue. The power rank (1) 351 is the second newest after the power rank (0) 350 and the power rank (9) 359 is the oldest of the stored ranks.

FIG 9 is a view illustrating a shop data table of the variable data. As illustrated in the figure, a shop type 361, a union membership 362, and a fixed point value 363 are registered in a shop data table 360 to be associated with one another. The shop type 361 indicates a type of shop existing in the virtual space of the game, in this example, 26 shops Sa to Sz are registered therein. The union membership 362 indicates a union to which each of the shops Sa to Sz belongs, and one of the unions Ua to Ue is registered therein.

The fixed point value 363 indicates how strongly each of the shops Sa to Sz is fixed to the union to which the shop belongs (same as the union membership 362). The union membership 362 is less likely to be changed even if a change is caused in the power ranks of the unions Ua to Uc as the fixed point value 363 of each of the shops Sa to Sz increases. When the union membership 362 of any of the shops Sa to Sz is changed, the initial fixed point value 226 is set to the fixed point value 363 as an initial value. The fixed point value 363 increases or decreases when change occurs in the power ranks of the unions Ua to Ue. Values 0 to 127 are given to the fixed point value 363.

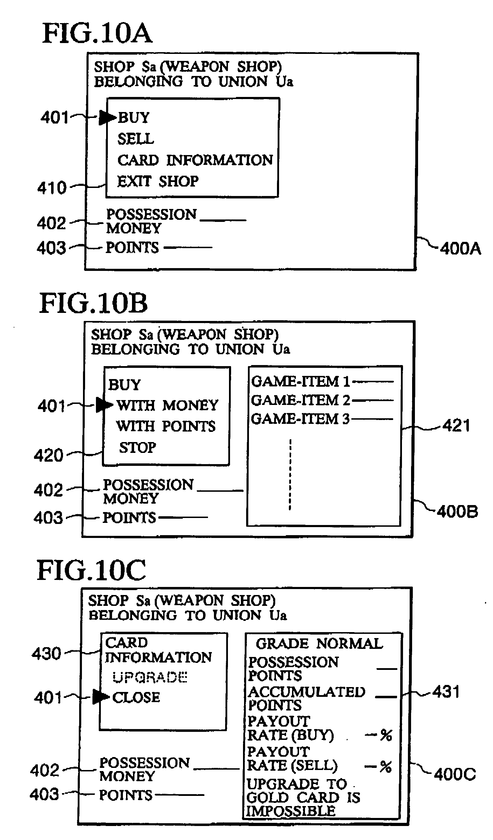

An explanation will be given of the buying or selling of a game item between each shop and the player character. When the player inputs a predetermined instruction from the input section 161 at the time when the player character is moved to a position of the shops Sa to Sz on the field, the player character can enter the shop to sell or buy a game item. FIGS. 10A to 10C are views each illustrating a menu screen displayed on the display screen 122 when the player character enters the shop. The menu screen shown in each of FIGS. 10A to 10C is displayed on the display screen 122 as a front side image of the player character image for displaying the player character at the shop.

FIG 10A is a view illustrating a menu screen 400A that is first displayed when the player character enters the shop. In the menu screen 400A, an item selection window 410 is provided to select one of the action items, namely, "sell", "buy", "card information" or "exit shop." The player operates the directional key of the input section 161 to move a cursor 401 to a desired action. The player further operates a predetermined button to select one of the actions. On the menu screen 400A, both player character's possession money 402 and possession points 403 of the point card corresponding to the union to which the shop belongs are displayed.

FIG. 10B is a view illustrating a menu screen 400B that is displayed when "buy" is selected from the selection window 410. The menu screen 400B includes an item selection window 420 and a game item selection window 421. The item selection window 420 is used to select one of the action items, namely, "(buy) with money", "(buy) with points" or "stop (buying)." The game item selection window 421 is used to select a game item from game items for sale at the shop.

On the item selection window 421, a game item that satisfies the following conditions is selected from the game items registered in the game item table 200 and displayed. Namely, the category 202 corresponds to the category 222 of the shop registered in the shop basic data table 220 and the rank 203 is included in the dealing rank 245 corresponding to the power rank 241 of the union to which the shop belongs. Moreover, on the game item selection window 421, a price that is obtained by the following process is displayed. Namely, the basic price 204 registered in the game item table 200 to be associated with each game item is multiplied by the buying time coefficient 243 corresponding to the power rank 241 of the union to which the shop belongs.

When the player selects either "(buy) with money" or "(buy) with points" from the item selection window 420 by operation of the input section 161, the player buys a game item from the game item selection window 421. At this time, the number of game items possessed by the player character increases by one, and the money corresponding to the price is subtracted from the possession money 301 or the points corresponding to the price are subtracted from the possession points 322 corresponding to the union to which the shop belongs. The possession money 402 or the possession points 403 displayed on the menu screen 400B is also decreased.

When "(buy) with money" is selected to buy a game item, points obtained by the following process are added to the possession points 322 and the accumulated points 323 of the point card of the union to which the shop belongs. Namely, the point value is obtained by multiplying the purchase price by the point payout rate 244 corresponding to the power rank 241 of the union to which the shop belongs and further multiplying the result by the buying time point payout rate 263 corresponding to the grade 261 of the point card of the union to which the shop belongs. The possession points 403 displayed on the menu screen 400B are also increased. When the player selects the action item of "stop (buying)" from the item selection window 420 by the operation of the input section 161, the display is retuned to the menu screen 400A.

FIG 10C is a view illustrating a menu screen 400C displayed when the player selects "card information" from the selection window 410. The menu screen 400C includes an item selection window 430 and a card information window 431. The item selection window 430 is used to select either an item of "upgrade (of the point card)" or an item of "close (card information)." The card information window 431 is used to display point card information corresponding to the union to which the shop belongs.

On the card information window 431, a grade of a point card corresponding to the grade flag 324 of the point card table 320, the possession points 322 and the accumulated points 323 are displayed. Moreover, on the card information window 431, whether the point card can be upgraded is displayed. The upgrade of the point card can be executed only when the accumulated points 323 reach a predetermined value and the possession money 402 reaches a predetermined value exceeding the amount required for upgrading.

In the case where the point card cannot be upgraded, "upgrade" cannot be selected from the item selection window 430 and "upgrade" is dimly displayed (FIG 10C illustrates this case). In this case, only "close (card information)" can be selected. In the case where the point card can be upgraded, when "upgrade" is selected from the item selection window 430 by the player's operation of the input section 161, the grade flag 324 higher than the current flag is set and the amount of money corresponding to the charge is subtracted from the possession money 301. The possession money 402 displayed on the menu screen 400C is decreased and the contents displayed on the card information window 431 are updated. When "close" is selected from the item selection window 430, the display is returned to the menu screen 400A.

In the menu screen 400A, when "sell" is selected from the item selection window 410, a list, displays each game item among the game items that the player character possesses, that the shop will buy, the prices of the game items, and the number of the game item possessed by the player character. The player can select a game item, which he/she desires to sell, from the game items included in this list. When the player selects a desirable game item, the number of game items is reduced by one and the possession money 402 is increased by the sale price. In the case of "sell", since there is no case in which a game item is sold by using the points of a point card, the player can select only "selling game item" or "stop selling."

In the menu screen 400A, when "exit shop" is selected from the item selection window 410, the player character leaves the shop. When the player character leaves the shop, a power point of each union is newly calculated according to the buying and/or selling of the game item performed at the shop by the player character. In the case where the power rank of any of the unions Ua to Ue changes from the newly calculated power point, the union to which each of the shops Sa to Sz belongs may change.

In the case where the power rank of any of the unions Ua to Ue changes, the fixed point value 363 is increased or decreased based on the following conditions. Namely, in connection with each of the shops Sa to Sz, the fixed point value 363 is increased or decreased depending on whether the current power rank (0) 350 is within the first to third places or the fourth or fifth place, whether the total value of the past ten power ranks 350 to 359 is equal to or greater than a predetermined value or not, whether an event of the union to which the shop belongs is being held, and whether the shop belongs to the designated union 224. Whether the union membership 362 of each of the shops Sa to Sz should be changed is decided with a probability, for example, of $((100 - \log_{1.5} (\text{fixed point}) / 101)$.

In the case where the union membership 362 should be changed, one of the unions Ua to Ue is selected as a changing destination according to the affinities 223a to 223e of the shop (note that the same union as the current union is not selected), so that the union membership 362 of the shop data table 360 is changed to the selected union. In connection with the shop that changes unions, the initial fixed point value 226 is set as an initial value of the fixed point value 363. In the case where the power rank of some of the unions Ua to Ue changes, the number of shops that change the union membership 362 at one time is limited, for example, to five shops.

The following will explain the processing in the video game according to this embodiment. Though processing for drawing the image of the game to be displayed on the display screen 122 is included as processing in the video game according to this embodiment, this processing is not related to the present invention and the specific explanation is omitted. In the progress of the game, though the battle between the player character and the enemy character is included, the specific explanation is omitted because this processing is not directly related to the present invention.

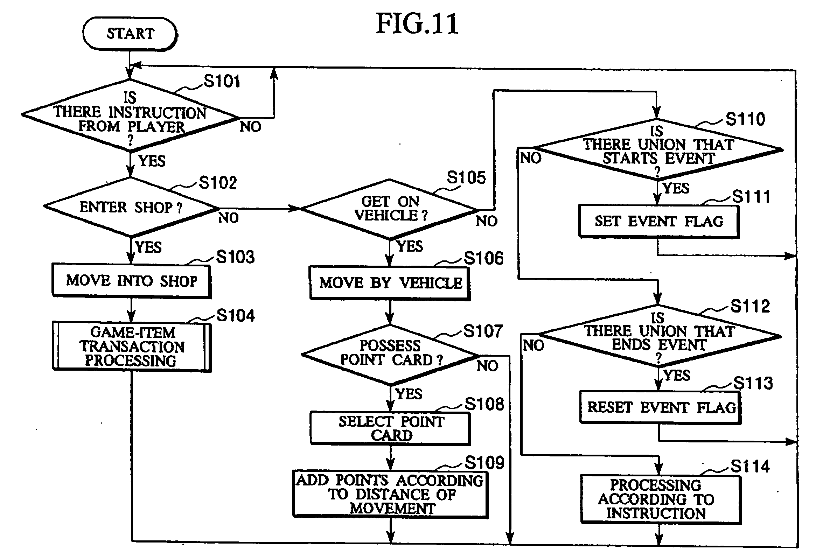

FIG. 11 is a flowchart illustrating main processing in the video game according to this embodiment. In the main processing, the control section 103 determines whether a player's instruction is input from the input section 161 (step S101). When no instruction is input from the input section 161, the control section 103 repeats the processing of step S101 and waits for the input of the instruction.

When the instruction is input from the input section 161, the control section 103 determines whether the instruction instructs the player character to enter any of the shops Sa to Sz (step S 102). When the instruction instructs the player character to enter one of the shops Sa to Sz, the control section 103 moves the player character into the corresponding shop (step S103). The control section 103 performs game item transaction processing to be specifically described later (step S104) and returns to the processing of step S101.

When the instruction input from the input section 161 docs not instruct the player character to enter any of shops Sa to Sz, the control section 103 determines whether the instruction instructs the player character to move by vehicle (step S105). When the instruction instructs the player character to move by vehicle, the control section 103 lets the player character get in the vehicle to move the player character to a predetermined destination according to the vehicle (step S106).

When the player character arrives at the predetermined destination and gets off the vehicle, the control section 103 determines whether the player character possesses a point card of one of the unions Ua to Ue (step S107). When the player character does not possess a point card of one of the unions Ua to Ue, the processing directly returns to the processing of step S101.

When the player character possesses a point card of one of the unions Ua to Ue, the control section 103 displays a card selection menu on the display screen 122. The player selects one of the point cards possessed by the player character by operating the input section 161 (step S108). The control section 103 adds a point value, which is proportional to a distance the player character moved by vehicle, to the possession points 322 and accumulated points 323 corresponding to the point card selected by the player (step S109). Then, the processing goes back to the processing of step S101.

When the instruction input from the input section 161 does not instruct the player character to move by vehicle, the control section 103 determines whether any union starts an event (step S110). When there is a union that starts an event, the control section 103 sets an event flag 343 of the union (step S111). Then, the processing goes back to the processing of step S101.

When there are no unions that start an event, the control section 103 determines whether there is a union that ends an event (step S112). When there is a union that ends an event, the control section 103 resets the event flag 343 of the union (step S113). Then, the processing goes back to the processing of step S101.

When there are no unions that end an event, the control section 103 performs various kinds of processing according to the contents of the instruction (step S114). These various kinds of processing are not directly related to the present invention, and the specific explanation is omitted. Then, the processing goes back to the processing of step S101 and the control section 103 waits for the input of the player's instruction from the input section 161.

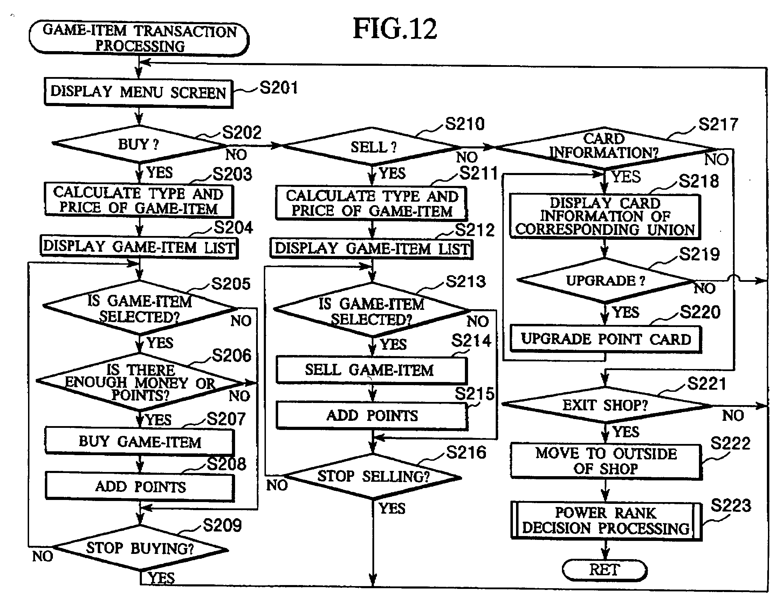

FIG. 12 is a flowchart specifically illustrating exemplary game item transaction processing of step S104. In the game item transaction processing, the control section 103 displays the menu screen 400A having the item selection window 410 for selecting an item from "buy", "sell", "card information" or "exit shop" on the display screen 122. The control section 103 reads the possession money 301 from the player character table 300 and the possession points 322 of the point card of the union to which the shop belongs from the point card table 320. Then, the read possession money and possession points are displayed as the possession money 402 and possession points 403 on the menu screen 400A (step 201).

The control section 103 determines whether "buy" is selected from the item selection window 410 (step S202). When "buy" is selected, the control section 103 extracts each game item having the category 202, which is the same as the shop category 222, and the rank 203 included in the dealing rank 245 corresponding to the power rank 241 of the union to which the shop belongs, from the game item table 200. The control section 103 multiplies the registered basic price 204 of the each extracted game item by the buying time coefficient 243 corresponding to the power rank 241 of the union to which the shop belongs to calculate the purchase price of the each extracted game item (step S203).

The control section 103 displays the game item selection window 421 including a list of the each extracted game item and its purchase price on the menu screen 4008. The control section 103 displays the item selection window 420 for selecting "(buy) with money", "(buy) with points" or "stop (buying)" on the menu screen 400B (step S204).

The control section 103 determines whether "(buy) with money" or "(buy) with points" is selected from the item selection window 420 and a game item to be bought by the player character is selected from the game item selection window 421 (step S205). When a game item is selected from the game item selection window 421, the control section 103 determines whether the possession money 301 or possession points 322 is sufficient to buy the selected game item (step S206).

When the possession money 301 or possession points 322 is sufficient to buy the selected game item, the control section 103 increases the possession number 302 of the selected game item by one and subtracts money or point value corresponding to the purchase price of the game item from the possession money 301 or the possession points 322. The control section 103 updates the display of the possession money 402 or possession point 403 on the menu screen 400B according to the subtraction of the possession money 301 or possession points 322 (step S207).

When the game item is bought with money, the control section 103 multiplies the purchase price of the game item by the point payout rate 244 corresponding to the power rank 241 of the union to which the shop belongs and further multiplier the result by the buying time point payout rate 263 corresponding to the card grade 261 of the point card of the union to which the shop belongs. Then, the result is added to the possession points 322 and accumulated points 323 (step S208). Then, the processing proceeds to the processing of step S209. When a game item is not selected or a game item is selected but the possession money 301 or possession points 322 is not sufficient to buy the game item, the processing directly proceeds to step S209.

In step S209, the control section 103 determines whether "stop (buying)" is selected from the selection window 420. When "stop (buying)" is not selected, the processing goes back to step S205. When "stop (buying)" is selected, the processing goes back to step S201 and the control section 103 displays the menu screen 400A, again.

When "buy" is not selected, the control section 103 determines whether "sell" is selected from the item selection window 410 of the menu screen 400A (step S210). When "sell" is selected, the control section 103 extracts each of the game items having the category 202, which is the same as the shop category 222, and possessed by the player character, and the number of the each extracted game item, from the player character table 300. The control section 103 multiplies the registered basic price 204 of the each extracted game item by the selling time coefficient 242 corresponding to the power rank 241 of the union to which the shop belongs to calculate the sale price of the each extracted game item (step S211).

The control section 103 displays the game item selection window 421 including a list of the each extracted game item and its sale price on the menu screen 400B. The selection window 420 for selecting "stop (selling)" is displayed on the menu screen 400B by the control section 103 (step S212).

The control section 103 determines whether a game item to be sold by the player character is selected from the item selection window (step S213). When a game item is selected from the game item selection window, the control section 103 subtracts the possession number 302 of the selected game item by one and adds money corresponding to the sale price of the game item to the possession money 301. The control section 103 updates the display of the possession money 402 on the menu screen 400B according to the addition of the possession money 301 (step S214).

The control section 103 multiplies the sale price of the game item by the point payout rate 244 corresponding to the power rank 241 of the union to which the shop belongs and further multiples the result by the selling time point payout rate 262 corresponding to the card grade 261 of the point card of the union to which the shop belongs. Then, the result is added to the possession points 322 and accumulated points 323 (step S215). Then, the processing proceeds to the processing of step S216. When a game item is not selected, the processing directly proceeds to step S216.

In step S216, the control section 103 determines whether "stop (selling)" is selected from the item selection window 420. When "stop (selling)" is not selected, the processing goes back to step S213. When "stop (selling)" is selected, the processing goes back to step S201 and the control section 103 displays the menu screen 400A, again.

When "sell" is not selected, the control section 103 determines whether "card information" is selected from the item selection window 410 of the menu screen 400A (step S217). When "card information" is selected, the control section 103 reads the possession points 322, the accumulated points 323 and a grade of the point card indicated by the grade flag 324 from the point card table 320, each of which corresponds to the union to which the shop belongs. The control section 103 displays the card information window 431 including these card information items on the menu screen 400C. The control section 103 displays the item selection window 430 (where "upgrade" can be selected when the point card can be updated) on the menu screen 400C (step S218).

The control section 103 determines whether "upgrade" is selected or "close" is selected (step S219). When "upgrade" is selected, the control section 103 sets the grade flag 324, which corresponds to the point card and is higher by one grade, and subtracts the possession money 301 by the charge (step S220). Then, the processing goes back to step S218, and the control section 103 displays the menu screen 400C where the display of the possession money 402 and that of the card information window 431 are updated. When "close" is selected, the processing goes back to step S201, and the control section 103 displays the menu screen 400A, again.

When "card information" is not selected, the control section 103 determines whether "exit shop" is selected from the selection window 410 of the menu screen 400A (step S221). When "exit shop" is not selected, the processing goes back to step S201, and the control section 103 continues displaying the menu screen 400A.

When "exit shop" is selected, the control section 103 moves the player character to the outside of the shop (step S222). The control section 103 increases the power points 342 of any of the unions Ua to Ue to which the shop belongs based on the buying and/or selling of game items performed by the player character at the shop, and performs power rank decision processing for deciding the power ranks of the unions Ua to Ue (step S223). The details on the power rank decision processing will be next explained. When the processing returns to this flowchart after ending the power rank decision processing, the control section 103 directly ends the game item transaction processing and returns to the flowchart of FIG 11.

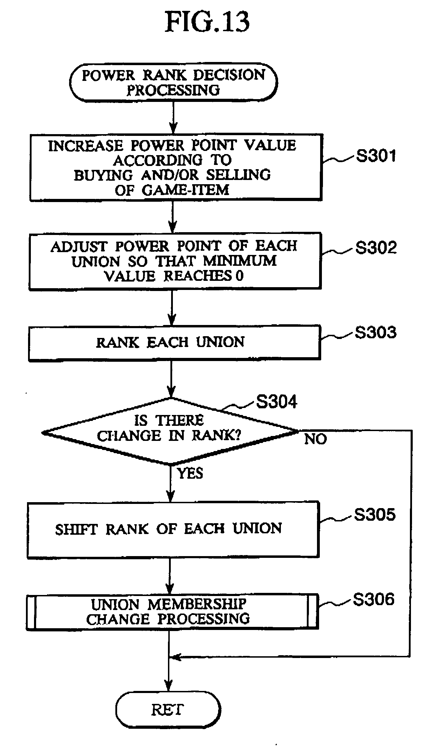

FIG 13 is a flowchart specifically illustrating exemplary power rank decision processing of step S223. In the power rank decision processing, the control section 103 increases the point value corresponding to the buying and/or selling of game items to the power points 342 of the unions Ua to Ue to which the shop belongs.

The point value added here is calculated by the equation of ((the number of bought and/or sold game items) x (the number of shops belong to the unions) ÷ 10). Decimal points are rounded up (step S301).

The control section 103 adjusts the power points 342 in such a way that the lowest power points 342 of unions Ua to Ue reaches 0. For example, when the power points 342 of the unions Ua to Ue are 20, 30, 40, 100, 80, respectively, 20, which is the lowest value, is subtracted from the respective points, with the result that 0, 10, 20, 80 and 60 points are set, respectively (step S302). The control section 103 sets the power ranks of the unions Ua to Ue (step S303). The control section 103 determines whether the set rank is different from the power rank (0) 350 (step S304). When the rank is not different, the power rank decision processing ends and the processing returns to the flowchart of FIG. 12.

When the rank is different, the control section 103 resets the power ranks (0) 350 to (8) 358 as power ranks (1) 351 to (9) 359 and stores the newly set rank as power rank (0) 350 (step 305). The control section 103 performs union membership change processing for changing the unions Ua to Ue to which up to five shops Sa to Sz belong based on the power ranks of the unions Ua to Uz (step S306). The details on the union membership change processing will be next explained. When the processing returns to this flowchart after ending the union membership change processing, the control section 103 directly ends the power rank decision processing and returns to the flowchart of FIG 12.

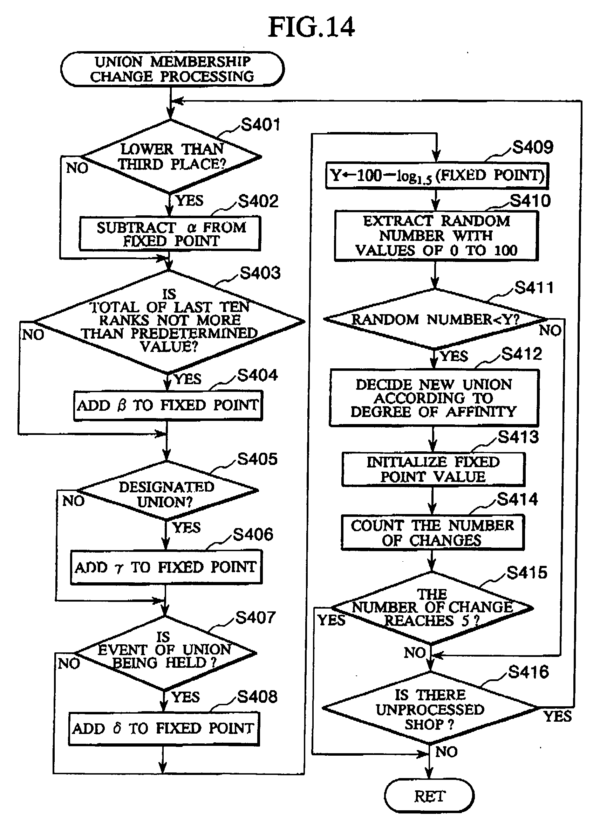

FIG 14 is a flowchart specifically illustrating exemplary union membership change processing of step S306. In the union membership change processing, the shops Sa, Sb, ... are processed sequentially. The control section 103 determines whether the current power rank (0) 350 of the union to which the processing shop belongs (same as the union membership 362 of the shop) is lower than the third rank (step S401). When the current power rank (0) 350 is greater than or equal to the third rank, the processing directly proceeds to step S403. When the current power rank (0) 350 is lower than the third rank, the control section 103 subtracts α from the fixed point value 363 of the processing shop (step S402). Then, the processing proceeds to step S403.

In step S403, the control section 103 determines whether the total value of the power ranks (0) 350 to (9) 359 of the union to which the processing shop belongs is equal to or smaller than a predetermined value. Regarding the predetermined value, a person, who fixes a game strategy, can select an arbitrary value. When the total value of the power ranks (0) 350 to (9) 359 is greater than the predetermined value, the processing directly proceeds to step S405. When the total value of the power ranks (0) 350 to (9) 359 is equal to or smaller than the predetermined value, the control section 103 adds P to the fixed point value 363 of the processing shop (step S404). Then, the processing proceeds to step S405.

In step S405, the control section 103 determines whether the union to which the processing shop belongs is the same as the designated union 224. When the union membership 362 is different from the designated union 224, the processing directly proceeds to step 407. When the union to which the processing shop belongs is the same as the designated union 224, the control section 103 adds γ to the fixed point value 363 of the processing shop (step S406). Then, the processing proceeds to step S407.

In step S407, the control section 103 determines whether the event of the union to which the processing shop belongs is being held depending on whether the event flag 343 of the unions Ua to Ue is set. When the event is not being held, the processing directly proceeds to step S409. When the event is being held, the control section 103 adds 8 to the fixed point value 363 of the processing shop (step S408). Then, the processing proceeds to step S409.

The values of α, β, γ, and δ that are added or subtracted to/from the fixed point value 363 are constants, and can be set to arbitrary values by a person who fixes the game strategy. The values of α, β, γ and δ may be the same.

In step S409, the control section 103 reads the fixed point value 363 of the processing shop. The control section 103 calculates numerical formula (1) and substitutes a calculation result into a variable Y (step S409).

$$100 - \log_{1.5} (\text{fixed point}) \qquad (1)$$

The control section 103 extracts a random number taking a value ranging from 0 to 100 by executing a random function (step S410). The control section 103 determines whether the extracted value of the random number is smaller than the variable Y (step S411). When the value of the random number is equal to or greater than the value of the variable Y, the processing directly proceeds to step S416.

When the value of the random number is smaller than the value of the variable Y, the control section 103 selects a union to which the processing shop newly joins from the unions Ua to Ue (except the union to which the processing shop currently belongs) according to the degree of affinities 223a to 223e fixed to the processing shop. The control section 103 stores the union selected from the unions Ua to Ue as the union membership 362 of the processing shop (step S412). The control section 103 sets a value of the initial fixed point value 226 to the fixed point value 363 of the processing shop (step S413).

When the union membership 362 of the processing shop is changed, the control section 103 increases the number of shops whose union is changed (changed number) by one (step S414). The control section 103 determines whether the changed number reaches five as a result of the addition (step S415). When the changed number does not reach five, the control section 103 determines whether there is a shop that is not yet processed in the shops Sa to Sz (step S416). When there is a shop that is not yet processed, the processing goes back to step S401 and the control section 103 executes the same processing for the next shop. When there is no shop that is not yet processed, the union membership change processing ends and the processing returns to the flowchart of FIG. 13. When the changed number reaches 5, the union membership change processing ends without processing shops that are not yet processed and the processing returns to the flowchart of FIG. 13.

As explained above, in the video game according to this embodiment, each of the shops Sa to Sz existing in the virtual space belongs to one of the dealer unions Ua to Ue. When the buying or selling of a game item is performed between the player character and each of the shops Sa to Sz, the value corresponding to the bought or sold game item is added to the power points 342 of the unions Ua to Ue where the shop that executes the buying or selling belongs according to the sales amount. The type and the price of the bought and sold game items, and the point payout rate to the point card are different depending on the power rank (0) 350 of the unions Ua to Ue according to the power point value.

By the transaction between the player character and each of the shops Sa to Sz in the game, the competition between the shops for membership unions Ua to Ue can be realized in the world of the game. The experience of the game is improved by realizing the competition between the shops.

The type and the price of game items bought and sold at each of the shops Sa to Sz, and the point payout rate to the point card are not uniformly set by the progress of the game, particularly, the buying and selling of game items executed between the player character and each of the shops Sa to Sz, so that variation of the progress of the game is expanded. Since this prevents the buying and selling of game items from becoming simple, the experience of the game is improved.

Though the power points 342 of each of the unions Ua to Ue are increased every time the player character leaves each of the shops Sa to Sz, each value of the power points 342 is adjusted so that the lowest value becomes zero. Accordingly, the value of the power points 342 of each of the unions Ua to Ue can be prevented from being increased too much, and the capacity for storing the value of the power points 342 can be reduced. The type and the price of bought and sold game items, and the point payout rate to the point card are changed according to the power rank (0) 350 corresponding to the power points, instead of the value of the power point itself, so that the decision processing does not become too complicated.

The union membership 362 of each of the shops Sa to Sz is changed by the union membership change processing, so that the relationship between each of the shops Sa to Sz and each of the unions Ua to Ue is not fixed. This makes it possible for each shop to change a transaction affiliate according to the competition power of the transaction affiliate (corresponding to the union in this case) and to improve the experience of the game. Since the union membership 362 of each of the shops Sa to Sz is changed by the union membership change processing only when the power rank (0) 350 of each of the unions Ua to Ue is varied, the change in the union membership 362 does not occur too frequently and the progress of the game does not become too complicated.

Since the change in the union is executed according to the fixed point value 363 assigned to each of the shops Sa to Sz, it is possible to precisely set whether the union membership 362 should be easily changed in connection with each of the shops Sa to Sz. Additionally, since the fixed point value 363 is increased or decreased according to the result of the buying and selling of a game item performed between the player character and each of the shops Sa to Sz (specifically, power rank (0) 350 of each of the unions Ua to Ue according to the result), the result of the buying and selling of the game items can be reflected in the change in the union membership 362 of each of the shops Sa to Sz.

When an event of any of the unions Ua to Ue is being held, the fixed point value 363 of each of the shops Sa to Sz belonging to the union where the event is being held is increased. This ensures that a transaction affiliate having an advantageous commercial condition cannot be easily changed in the world of the game. In the case where the union membership 362 is the same as the designated union 224, the fixed point value of each of the shops Sa to Sz is increased. This ensures that a transaction affiliate having a strong relationship cannot be easily changed in the world of the game.

In the case of deciding whether the union membership 362 of each of the shops Sa to Sz should be changed based on the fixed point value of the shop, not the value of the fixed point value 363 itself but a logarithm of the fixed point value 363 is used. By determining whether the union membership 362 should be changed by the value calculated using the logarithm, each of the shops Sa to Sz can be easily fixed to the currently joined union. Even if the logarithm function is not used, the change in the value that is used for determining based on the fixed point value 363 is non-linearly set to make it possible to obtain the same effect.

Regarding each of the shops Sa to Sz, the degree of each of affinities 223a to 223e to each of unions Ua to Ue is set. A new union membership of any of the shops Sa to Sz where the union membership 362 should be changed is decided according to the degree of each of the affinities 223a to 223e. This makes it possible to realize that the shop can easily belong to a transaction affiliate having a strong relationship in the world of the game. In addition to ensuring that union membership 362 is not easily changed by the designated union 224, it is possible to realize that the shop can easily belong to the transaction affiliate having a strong relationship in the world of the game.

In the union membership change processing when the change occurs in the power rank (0) 350 of each of the unions Ua to Ue, the number of shops Sa to Sz whose union membership 362 are changed simultaneously is limited to five. For this reason, the change in the union membership 362 of each of the shops Sa to Sz does not become too large. The progress of the game does not become too complicated so that the player is prevented from being confused.

In the commercial condition table 240, since the selling time coefficient 242, the buying time coefficient 243, the point payout rate 244 and the dealing rank 245 are different according to the power rank 241, it is possible to realize that the type of item and the price of the game items, the price and the point payout rate to the point card are different according to competition in the world of the game. Since the point card is prepared to correspond to each of the unions Ua to Ue, the point card facilitates customer retention.

Since the point payout rate is changed according to the grade of the point card, it is possible to give favorable treatment to regular customers in the world of the game. Since the player character uses the vehicle to add points to the point card, the player is encouraged to use the vehicle when the player character moves in the virtual space.

Since the number of the shops Sa to Sz is greater than the number of the unions Ua to Ue, each union has one or more member shops in many cases. This makes it possible that the power rank of unions changes easily and the union membership 362 of at least one shop changes relatively often. Therefore, the experience of the game can be improved.

In the video game according to this embodiment, the competition between the shops Sa to Sz can be realized in the world of the game. The operation of the game of each of the shops Sa to Sz is a passive operation according to the operation of the player character, so that the shops Sa to Sz do not actively operate. In the case where the commercial transaction of the real world is simulated, there is a need to operate the shops Sa to Sz actively and an artificial intelligence routine for controlling the operation of each shop is required. In contrast to this, in the video game according to this embodiment, since there is no need for an artificial intelligence routine for each shop, it is possible to execute various kinds of transactions in which the competition relationship between the shops Sa to Sz is reflected by simple processing.

The present invention is not limited to the aforementioned embodiment, and various modifications and applications may be possible. The following explains modifications of the aforementioned embodiment to which the present invention can be applied.

In the aforementioned embodiment, the values of α, β, γ, and δ that are added or subtracted in the union membership change processing are the same regardless of the shops Sa to Sz. In contrast to this, different values of α, β, γ, and δ of each of the shops Sa to Sz are registered in the shop basic data table 220 and the valuer of α, β, γ, and δ corresponding to the processing shop may be added or subtracted to/from the fixed point value 363. Accordingly, even if the union membership 362 of a shop is the same as that of another shop, the increase or decrease in the fixed point values 363 of the shops are different, so that abundant forms of the change in the union membership 362 of each of the shops Sa to Sz can be obtained. Additionally, the values of α, β, γ, and/or δ may be minus values.

In the aforementioned embodiment, the change in the union membership 362 of each of the shops Sa to Sz is performed under the condition that the variation in the power rank (0) 350 occurs. Further, the change in the union membership 362 of each of the shops Sa to Sz is performed under the condition that the value of the extracted random number is smaller than the value of the variable Y based on the fixed point value 363 of each of the shops Sa to Sz. However, the change in the union membership 362 of each of the shops Sa to Sz may be performed under other conditions.

Occurrence of a predetermined event (different from the event of each of the unions Ua to Ue) in the progress of a predetermined game can be used as the condition for changing the union membership 362 of each of the shops Sa to Sz. The condition for changing the union membership 362 of each of the shops Sa to Sz may be one that occurs in each of the shops Sa to Sz.

The number of shops Sa to Sz whose union membership 362 can be changed in the union membership change processing at one time may be an arbitrary number, which is less than the number of shops and more than one without being limited to five. Preferably, the number of shops Sa to Sz whose union membership can be changed in the union membership change processing at one time is less than about 20 percent of the total number of shops.

In the aforementioned embodiment, the places where the player character can buy and/or sell game items are only shops Sa to Sz predetermined in the virtual space. In contrast to this, game items may be bought and/or sold between a peddler character (non-player character), who moves in the virtual space, and the player character. Other possibilities include the player opening the menu screen with an arbitrary timing, so that the player character may buy a game item by mail. A vending machine can be set up, so that the player character may buy a game item from the vending machine. The dealers (peddler, vending machine dealer, vending machine) other than the shops Sa to Sz may also belong to one of the unions Ua to Uz, similar to the shops Sa to Sz. This makes it possible to change the form of the buying and/or selling of game items according to the union where each dealer belongs.

In the aforementioned embodiment, when the player character buys or sells a game item at any of the shops Sa to Sz, the power points 342 of the union Ua to Ue to which the shop belongs is increased according to the sales amount. Even if the player character neither buys nor sells a game item, the power points 342 of the union Ua to Uz to which the shop belongs may be increased when predetermined information useful for the progress of the game is presented to the player character after having a conversation with a merchant character of the shop. Accordingly, a rumor of the shop at which useful information can be obtained is spread by word of mouth from the customer (corresponding to the player character in this case) who neither buys nor sells a game item. As a result, a phenomenon that improves the ability to pull in customers can be realized in the world of the game to make it possible to further improve the experience of the game.

The type and the price of game items that are bought and sold, and the point payout rate to the point card are changed according to the power rank (0) 350 of each of the unions Ua to Ue. In addition to this, at any of the shops Sa to Sz belonging to the union with a high power rank, the content of information presented from the merchant character of the shop to the player character may be changed. The higher the power rank of the union to which a shop belongs, the more useful the information presented from the merchant character is. Accordingly, a phenomenon in which more useful information is collected to the dealer having strong competition can be realized in the world of the game, even if the information is not related to the commercial transactions. This makes it possible to further improve an experience of the game.

Even when information (for example, information relating to the event of each of the unions Ua to Ue) is presented to the player character at a conversation with the character (non-player character) who neither buys nor sells a game item, the power points 342 of each of the unions Ua to Ue may be increased. Accordingly, a phenomenon that commonly occurs in the real world in which the ability to pull in customers is improved by word of mouth and advertisement can be realized in the world of the game and the experience of the game is improved. The character that gives an influence upon the power points 342 of each of the unions Ua to Ue may exist individually or in common regarding the unions Ua to Ue.

In the aforementioned embodiment, the video game apparatus 100, which is a special-purpose machine, is used as a platform. In contrast to this, any apparatus such as a general-purpose computer may be used if the apparatus includes the same structural components as those of the video game main body 101 and a function of drawing an image. Moreover, a portable video game apparatus, which contains the display device 121 and the sound output device 125 in the same cabinet as that of the video game main body 101, may also be used.

In the aforementioned embodiment, the program and data of the video game apparatus 100 are stored in the storage medium 131 and distributed. A semiconductor memory card can be used as the storage medium 131 in place of a DVD-ROM or CD-ROM. In this case, the computer apparatus applied as a platform includes a card slot for inserting the memory card in place of the DVD/CD-ROM drive 113. The program and data relating to the present invention may be prestored in the HDD 107. Regarding the storage medium for storing the program and data relating to the present invention, any storage medium may be used according to the physical form of hardware and the distribution thereof.

The programs and data relating to the present invention may be stored on a fixed disk apparatus provided in a Web server. The Web server may convert the program and data stored in the fixed disk apparatus to a signal and superimpose the signal on a carrier wave, and distribute it to the video game main body 101 via the network 151. For example, the program and data, which the communications interface 115 receives from the Web server, can be stored in the HDD 107 and loaded to the RAM 105 at an executing time.

Although the invention has been described with reference to several exemplary embodiments, it is understood that the words that have been used are words of description and illustration, rather than words of limitation. Changes may be made within the purview of the appended claims, as presently stated and as amended, without departing from the scope and spirit of the invention in its aspects. Although the invention has been described with reference to particular means, materials and embodiments, the invention is not intended to be limited to the particulars disclosed; rather, the invention extends to all functionally equivalent structures, methods, and uses such as are within the scope of the appended claims.

## Claims

1. A game apparatus for executing a game including virtual commercial transactions between a plurality of dealers existing in a virtual space and a player character that operates according to a player's instruction, comprising:

   a dealer union storage that stores a plurality of dealer unions, to which each of the dealers belongs;
   an evaluation value setting section that sets an evaluation value of each dealer union based on previous commercial transactions performed between the player character and the plurality of dealers; and

a transaction form changer that changes a form of a current commercial transaction performed between one of the plurality of dealers and the player character according to the evaluation value of the dealer union to which the dealer belongs.

2. The game apparatus according to claim 1, wherein a number of the plurality of dealers is equal to or greater than a number of the plurality of dealer unions.

3. The game apparatus according to claim 1, further comprising a ranking section that ranks the plurality of dealer unions according to the set evaluation value of each dealer union,
wherein said transaction form changer changes the form of the current commercial transaction according to a rank of the dealer union to which the dealer belongs.

4. The game apparatus according to claim 1, further comprising a union membership changer that changes a dealer union to which at least one dealer belongs when a predetermined membership change condition is satisfied.

5. The game apparatus according to claim 4, further comprising a ranking section that ranks the plurality of dealer unions according to the set evaluation value of each dealer union,
wherein said union membership changer changes the dealer union to which at least one dealer belongs when there is a change in rank of any of the plurality of dealer unions.

6. The game apparatus according to claim 4, further comprising a fixing degree setting section that sets a fixing degree indicating how strongly each dealer is fixed to the dealer union to which the dealer currently belongs,
wherein said union membership changer changes the dealer union to which at least one dealer belongs based on the set fixing degree.

7. The game apparatus according to claim 6, wherein said fixing degree setting section sets the fixing degree to each dealer based on the previous commercial transactions performed between each of the plurality of dealers and the player character.

8. The game apparatus according to claim 7, wherein said fixing degree setting section sets the fixing degree to each dealer according to the ranks of the dealer unions to which the dealers belong.

9. The game apparatus according to claim 7, further comprising a rank history storage that stores histories of the ranks of the plurality of dealer unions,
wherein said fixing degree setting section sets the fixing degree to each dealer according to the history of the rank of the dealer union.

10. The game apparatus according to claim 6, further comprising a designated union storage that stores a designated union to which each dealer most easily belongs among the plurality of dealer unions,
wherein said fixing degree setting section sets the fixing degree to each dealer according to whether the dealer union of each dealer is the designated union.

11. The game apparatus according to claim 6, further comprising an event generator that generates an event fixed to each of the plurality of dealer unions when a predetermined condition is satisfied,
wherein said fixing degree setting section sets the fixing degree to each dealer according to whether the dealer union to which the dealer belongs is holding the event.

12. The game apparatus according to claim 4, further comprising an affinity degree storage that stores an affinity degree indicating how strongly each of the plurality of dealers belongs to each dealer union,
wherein said union membership changer changes the dealer union to which at least one dealer belongs based on the affinity degree.

13. The game apparatus according to claim 4, wherein a number of dealers that changes dealer unions simultaneously is limited to a predetermined number.

14. The game apparatus according to claim 1,
wherein game progress information that is useful to progress the game, other than commercial transaction information, is given to the player character from the plurality of dealers when a predetermined condition is satisfied during the progress of the game; and
wherein said evaluation value setting section sets an evaluation value of each dealer union based on the game progress information given to the player character from each of the plurality of dealers.

15. The game apparatus according to claim 1,
wherein the current commercial transaction includes a transaction for exchanging a plurality of types of game items between the plurality of dealers and the player character, and
wherein said transaction form changer changes the type of game item that can be exchanged between each dealer and the player character.

16. The game apparatus according to claim 1,
wherein the current commercial transaction includes a transaction for buying and/or selling a game item between the plurality of dealers and the player character using virtual money; and

wherein said transaction form changer changes a price of the game item to be bought and/or sold between each dealer and the player character.

17. The game apparatus according to claim 1,

wherein the current commercial transaction includes a transaction for giving points to the player character according to the transaction of trading a game item between the plurality of dealers and the player character, and

wherein said transaction form changer changes the number of points given to the player character by the transaction of trading the game item.

18. The game apparatus according to claim 1,

wherein game progress information that is useful to progress the game, other than commercial transaction information, is given to the player character from the plurality of dealers when a predetermined condition is satisfied during the progress of the game; and

said game apparatus further comprises an information content changer that changes content of the game progress information according to the set evaluation value of each dealer union.

19. A game apparatus for executing a game including virtual commercial transactions between a plurality of dealers existing in a virtual space and a player character that operates according to a player's instruction, comprising:

a program memory that stores a program; a data memory that stores data; and a processor that executes the program;

wherein said data memory stores a plurality of dealer unions to which each of the plurality of dealers, belongs;

wherein the program causes said processor to execute:

setting an evaluation value of each dealer union based on previous commercial transactions performed between the player character and the plurality of dealers; and changing a form of a current commercial transaction performed between one of the plurality of dealers and the player character according to the evaluation value of the dealer union to which the dealer belongs.

20. The game apparatus according to claim 19, wherein a number of the plurality of dealers is equal to or greater than a number of the plurality of dealer unions.

21. The game apparatus according to claim 19, wherein the program further causes said processor to execute:

ranking the plurality of dealer unions according to the set evaluation value of each dealer union; and

changing the form of the current commercial transaction according to a rank of the dealer union to which the dealer belongs.

22. The game apparatus according to claim 19, wherein the program further causes said processor to execute:

changing a dealer union to which at least one dealer belongs when a predetermined membership change condition is satisfied.

23. The game apparatus according to claim 22, wherein the program further causes said processor to execute:

ranking the plurality of dealer unions according to the set evaluation value of each dealer union; and

changing a dealer union to which at least one dealer belongs when there is a change in the rank of any of the plurality of dealer unions.

24. The game apparatus according to claim 22, wherein the program further causes said processor to execute:

setting a fixing degree indicating how strongly each dealer is fixed to the dealer union to which the dealer currently belongs; and

changing the dealer union to which at least one dealer belongs based on the set fixing degree.

25. The game apparatus according to claim 22,

wherein said program memory further stores an affinity degree indicating how strongly each of the plurality of dealers belongs to each dealer union; and

wherein the program further causes said processor to execute:

changing the dealer union to which at least one dealer belongs based on the affinity degree.

26. A method for progressing a game including virtual commercial transactions between a plurality of dealers and a player character that operates according to a player's instruction, each of the plurality of dealers belonging to one of a plurality of unions, the method comprising:

setting an evaluation value of each dealer union based on previous commercial transactions performed between the player character and the plurality of dealers; and
changing a form of a current commercial transaction performed between one of the plurality of the dealers and the player character according to the set evaluation value of the dealer union to which the dealer belongs.

27. The method according to claim 26, wherein a number of the plurality of dealers is equal to or greater than a number of the plurality of dealer unions.

28. A computer-readable storage medium that records a program for causing a computer apparatus to execute a game including virtual commercial transactions between a plurality of dealers and a player character that operates according to a player's instruction, each of the plurality of dealers belonging to one of a plurality of unions,
    wherein the program causes the computer apparatus to execute:

setting an evaluation value of each dealer union based on previous commercial transactions performed between the player character and the plurality of dealers; and
changing a form of a current commercial transaction performed between one of the plurality of dealers and the player character according to the set evaluation value of the dealer union to which the dealer belongs.

29. A carrier wave superimposed with a data signal of a program for causing a computer apparatus to execute a game including virtual commercial transactions between a plurality of dealers and a player character that operates according to a player's instruction, each of the plurality of dealers belonging to one of a plurality of unions,
    wherein the program causes the computer apparatus to execute:

setting an evaluation value of each dealer union based on previous commercial transactions performed between the player character and the plurality of dealers; and
changing a form of a current commercial transaction performed between one of the plurality of dealers and the player character according to the set evaluation value of the dealer union to which the dealer belongs.

# FIG.1

- 112 — FRAME MEMORY
- 103 — CONTROL SECTION (CPU,ROM,etc.)
- 119
- 111 — GRAPHICS PROCESSING SECTION
- VIDEO OUTPUT
- 121
- 122
- 107 — HDD
- 113 — DVD/CD-ROM DRIVE
- 131
- 105 — RAM
- SOUND OUTPUT
- 115 — COMMUNICATIONS INTERFACE
- 151
- SOUND PROCESSING SECTION
- 109
- 125
- 161 — INPUT SECTION (CONTROLLER)
- 117 — INTERFACE SECTION
- 162 — MEMORY CARD
- NETWORK
- 101
- 100

EP 1 555 641 A1

## FIG.2

200

| GAME-ITEM NAME | CATEGORY | RANK | BASIC PRICE | OTHER DATA |
|---|---|---|---|---|
| GAME-ITEM 1 | | | | |
| GAME-ITEM 2 | | | | |
| GAME-ITEM 3 | | | | |
| ⋮ | ⋮ | ⋮ | ⋮ | ⋮ |
| GAME-ITEM n | | | | |

201  202  203  204  205

## FIG.3

220

| SHOP TYPE | CATEGORY | DEGREE OF AFFINITY | | | | | DESIG-NATED UNION | INITIAL UNION | INITIAL FIXED POINT VALUE |
|---|---|---|---|---|---|---|---|---|---|
| | | Ua | Ub | Uc | Ud | Ue | | | |
| Sa | | | | | | | | | |
| Sb | | | | | | | | | |
| Sc | | | | | | | | | |
| ⋮ | ⋮ | ⋮ | ⋮ | ⋮ | ⋮ | ⋮ | ⋮ | ⋮ | ⋮ |
| Sz | | | | | | | | | |

221  222  223a 223b 223c 223d 223e  224  225  226

# FIG.4

240

| POWER RANK | SELLING TIME COEFFICIENT | BUYING TIME COEFFICIENT | POINT PAYOUT RATE | DEALING RANK |
|---|---|---|---|---|
| 1 | | | | |
| 2 | | | | |
| 3 | | | | |
| 4 | | | | |
| 5 | | | | |

241    242    243    244    245

# FIG.5

260

| CARD GRADE | POINT PAYOUT RATE | |
|---|---|---|
| | SELLING TIME | BUYING TIME |
| NORMAL | | |
| GOLD | | |
| PLATINA | | |

261    262    263

## FIG.6

300

| |
|---|
| ⋮ |
| POSSESSION MONEY — 301 |
| POSSESSION NUMBER OF GAME-ITEM 1 |
| POSSESSION NUMBER OF GAME-ITEM 2 |
| ⋮ |
| POSSESSION NUMBER OF GAME-ITEM n |
| ⋮ |

302

## FIG.7

320

| UNION TYPE | POSSESSION POINTS | ACCUMULATED POINTS | GRADE FLAG | | |
|---|---|---|---|---|---|
| | | | N | G | P |
| Ua | | | | | |
| Ub | | | | | |
| Uc | | | | | |
| Ud | | | | | |
| Ue | | | | | |

321  322  323  324

## FIG.8

340

| UNION TYPE | POWER POINTS | EVENT FLAG | POWER RANK (0) | POWER RANK (1) | ------ | POWER RANK (8) | POWER RANK (9) |
|---|---|---|---|---|---|---|---|
| Ua | | | | | ------ | | |
| Ub | | | | | ------ | | |
| Uc | | | | | ------ | | |
| Ud | | | | | ------ | | |
| Ue | | | | | ------ | | |

341  342  343  350  351  358  359

## FIG.9

360

| SHOP TYPE | UNION MEMBERSHIP | FIXED POINT VALUE |
|---|---|---|
| Sa | | |
| Sb | | |
| Sc | | |
| ⋮ | ⋮ | ⋮ |
| Sz | | |

361  362  363

## FIG.10A

```
SHOP Sa (WEAPON SHOP)
BELONGING TO UNION Ua
```

401 ▶BUY
　　　SELL
　　　CARD INFORMATION
410 EXIT SHOP

402 POSSESSION ＿＿＿＿
　　 MONEY
403 POINTS ＿＿＿＿

400A

## FIG.10B

```
SHOP Sa (WEAPON SHOP)
BELONGING TO UNION Ua
```

　　　BUY
401 ▶WITH MONEY
　　　WITH POINTS
420 STOP

402 POSSESSION ＿＿＿＿
　　 MONEY
403 POINTS ＿＿＿＿

GAME-ITEM 1 ＿＿＿
GAME-ITEM 2 ＿＿＿
GAME-ITEM 3 ＿＿＿

421

400B

## FIG.10C

```
SHOP Sa (WEAPON SHOP)
BELONGING TO UNION Ua
```

430 CARD INFORMATION
　　　UPGRADE
401 ▶CLOSE

402 POSSESSION ＿＿＿＿
　　 MONEY
403 POINTS ＿＿＿＿

GRADE NORMAL
POSSESSION ＿＿
POINTS
ACCUMULATED ＿＿
POINTS
PAYOUT
RATE (BUY)　 ＿％
PAYOUT
RATE (SELL)　 ＿％
UPGRADE TO
GOLD CARD IS
IMPOSSIBLE

431

400C

# FIG.11

START

S101 — IS THERE INSTRUCTION FROM PLAYER ? — NO

YES

S102 — ENTER SHOP ? — NO

YES

S103 — MOVE INTO SHOP

S104 — GAME-ITEM TRANSACTION PROCESSING

S105 — GET ON VEHICLE ? — NO

YES

S106 — MOVE BY VEHICLE

S107 — POSSESS POINT CARD ? — NO

YES

S108 — SELECT POINT CARD

S109 — ADD POINTS ACCORDING TO DISTANCE OF MOVEMENT

S110 — IS THERE UNION THAT STARTS EVENT ? — NO

YES

S111 — SET EVENT FLAG

S112 — IS THERE UNION THAT ENDS EVENT ? — NO

YES

S113 — RESET EVENT FLAG

S114 — PROCESSING ACCORDING TO INSTRUCTION

EP 1 555 641 A1

FIG.12

# FIG.13

```
      ┌─────────────────────────┐
      │  POWER RANK DECISION    │
      │       PROCESSING        │
      └─────────────────────────┘
                  │
                  ▼
   ┌─────────────────────────────┐
   │  INCREASE POWER POINT VALUE │ ─── S301
   │        ACCORDING TO         │
   │    BUYING AND/OR SELLING    │
   │        OF GAME-ITEM         │
   └─────────────────────────────┘
                  │
                  ▼
   ┌─────────────────────────────┐
   │  ADJUST POWER POINT OF EACH │ ─── S302
   │   UNION SO THAT MINIMUM     │
   │      VALUE REACHES 0        │
   └─────────────────────────────┘
                  │
                  ▼
   ┌─────────────────────────────┐
   │      RANK EACH UNION        │ ─── S303
   └─────────────────────────────┘
                  │
                  ▼          S304
            ◇───────────────◇
            │   IS THERE     │ ──── NO ──┐
            │ CHANGE IN RANK?│           │
            ◇───────────────◇           │
                  │ YES                  │
                  ▼                      │
   ┌─────────────────────────────┐      │
   │    SHIFT RANK OF EACH UNION │ ── S305
   └─────────────────────────────┘      │
                  │                      │
                  ▼                      │
   ┌─────────────────────────────┐      │
   │     UNION MEMBERSHIP        │ ── S306
   │     CHANGE PROCESSING       │      │
   └─────────────────────────────┘      │
                  │ ◄───────────────────┘
                  ▼
              ┌────────┐
              │  RET   │
              └────────┘
```

# FIG.14

UNION MEMBERSHIP
CHANGE PROCESSING

S401
LOWER THAN
THIRD PLACE?
NO

YES S402
SUBTRACT $\alpha$ FROM
FIXED POINT

S403
IS
TOTAL OF LAST TEN
RANKS NOT MORE
THAN PREDETERMINED
VALUE?
NO

YES S404
ADD $\beta$ TO FIXED POINT

S405
DESIGNATED
UNION?
NO

YES S406
ADD $\gamma$ TO FIXED POINT

S407
IS
EVENT OF UNION
BEING HELD?
NO

YES S408
ADD $\delta$ TO FIXED POINT

S409
$Y \leftarrow 100 - \log_{1.5}$ (FIXED POINT)

S410
EXTRACT RANDOM
NUMBER WITH
VALUES OF 0 TO 100

S411
RANDOM NUMBER<Y?
NO

YES S412
DECIDE NEW UNION
ACCORDING TO
DEGREE OF AFFINITY

S413
INITIALIZE FIXED
POINT VALUE

S414
COUNT THE NUMBER
OF CHANGES

S415
THE
NUMBER OF CHANGE
REACHES 5?
YES
NO

S416
IS THERE
UNPROCESSED
SHOP?
YES
NO

RET

**EP 1 555 641 A1**

European Patent Office

**EUROPEAN SEARCH REPORT**

Application Number

EP 05 00 0745

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/216184 A1 (KIGOSHI YUSUKE) 20 November 2003 (2003-11-20) * the whole document * ----- | 1-29 | G07F17/32 A63F13/10 |
| X | WO 03/066183 A (KONAMI CORPORATION; YAMADA, NOBUHIRO; CHIDA, TAKURI) 14 August 2003 (2003-08-14) * abstract * ----- | 1-29 | |

TECHNICAL FIELDS SEARCHED (Int.Cl.7)

G07F

The present search report has been drawn up for all claims

| Place of search | Date of completion of the search | Examiner |
|---|---|---|
| The Hague | 19 April 2005 | Van Dop, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 555 641 A1**

**ANNEX TO THE EUROPEAN SEARCH REPORT
ON EUROPEAN PATENT APPLICATION NO.**
EP 05 00 0745

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2005

| Patent document cited in search report | | Publication date | Patent family member(s) | | Publication date |
|---|---|---|---|---|---|
| US 2003216184 | A1 | 20-11-2003 | JP | 3561511 B2 | 02-09-2004 |
| | | | JP | 2003325984 A | 18-11-2003 |
| WO 03066183 | A | 14-08-2003 | JP | 3491281 B2 | 26-01-2004 |
| | | | JP | 2003225459 A | 12-08-2003 |
| | | | AU | 2002349664 A1 | 02-09-2003 |
| | | | EP | 1477211 A1 | 17-11-2004 |
| | | | WO | 03066183 A1 | 14-08-2003 |
| | | | US | 2004137975 A1 | 15-07-2004 |

EPO FORM P0459

For more details about this annex : see Official Journal of the European Patent Office, No. 12/82